# EUROPEAN PATENT APPLICATION

(11) **EP 4 543 068 A1**
(43) Date of publication of application: **23.04.2025**
(21) Application number: 22947855.7
(22) Date of filing: 20.06.2022
(51) Int. Cl.: H04W 16/14, H04W 24/02

(54) **TERMINAL, WIRELESS COMMUNICATION METHOD, AND BASE STATION**

(71) Applicant: NTT DOCOMO, INC., Tokyo 100-6150 (JP)
(72) Inventor: OKANO, Mayuko, Tokyo 100-6150 (JP); HARADA, Hiroki, Tokyo 100-6150 (JP); KUMAGAI, Shinya, Tokyo 100-6150 (JP); NAGATA, Satoshi, Tokyo 100-6150 (JP)
(74) Representative: Hoffmann Eitle
(86) International application number: PCT/JP2022/024529
(87) International publication number: WO 2023/248291

(57) **Abstract**

A terminal according to one aspect of the present disclosure is a terminal corresponding to a first operator and includes: a receiving section that receives configuration information regarding a signal for measuring interference, and receives, based on the configuration information, the signal for measuring interference from at least one of a terminal and a base station corresponding to a second operator; and a control section that determines, based on the signal for measuring interference, interference by a signal from at least one of the terminal and the base station corresponding to the second operator that has transmitted the signal for measuring interference. According to one aspect of the present disclosure, flexible communication operation for operators is possible.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (Non-Patent Literature 1). In addition, for the purpose of further high capacity, advancement and the like of LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, Rel. 18 or later versions), performing resource sharing has been under study for the purpose of more efficiently utilizing frequency bands (existing frequency bands and new high frequency bands).

However, a configuration for a specific UE cannot be changed between a plurality of operators in some cases. In such a case, flexible communication operation per operator cannot be performed, which may suppress communication quality improvement.

Thus, an object of the present disclosure is to provide a terminal, a radio communication method, and a base station that enable flexible communication operation for operators.

### Solution to Problem

A terminal according to one aspect of the present disclosure is a terminal corresponding to a first operator and includes: a receiving section that receives configuration information regarding a signal for measuring interference, and receives, based on the configuration information, the signal for measuring interference from at least one of a terminal and a base station corresponding to a second operator; and a control section that determines, based on the signal for measuring interference, interference by a signal from at least one of the terminal and the base station corresponding to the second operator that has transmitted the signal for measuring interference.

### Advantageous Effects of Invention

According to one aspect of the present disclosure, flexible communication operation for operators is possible.

### Brief Description of Drawings

[FIG. 1] FIG. 1A to FIG. 1D are diagrams to show examples of network sharing.
[FIG. 2] FIG. 2 is a diagram to show an example of CLI.
[FIG. 3] FIG. 3 is a diagram to show an example of measurement of interference according to embodiment 1-1.
[FIG. 4] FIG. 4A to FIG. 4C are diagrams to show examples of CLI in UEs/a base station(s).
[FIG. 5] FIG. 5 is a diagram to show an example of measurement of interference according to embodiment 2-1.
[FIG. 6] FIG. 6 is a diagram to show an example of measurement of interference according to embodiment 2-3.
[FIG. 7] FIG. 7 is a diagram to show an example of a schematic structure of a radio communication system according to one embodiment.
[FIG. 8] FIG. 8 is a diagram to show an example of a structure of a base station according to one embodiment.
[FIG. 9] FIG. 9 is a diagram to show an example of a structure of a user terminal according to one embodiment.
[FIG. 10] FIG. 10 is a diagram to show an example of a hardware structure of the base station and the user terminal according to one embodiment.
[FIG. 11] FIG. 11 is a diagram to show an example of a vehicle according to one embodiment.

### Description of Embodiments

### (Resource Sharing)

For future radio communication systems (for example, Rel. 18 or later versions), performing resource sharing has been under study for the purpose of more efficiently utilizing frequency bands (existing frequency bands and new high frequency bands).

In resource sharing, a plurality of operators share a Radio Access Network (RAN) to divide network (NW, for example, base stations) investment cost among the operators, enabling a large number of base stations to be installed.

For example, by sharing an antenna site (land/a steel tower, or the like), a plurality of operators can be assigned shares of base station deployment cost.

By sharing a distributed unit (for example, DU)/central unit (for example, CU) between a plurality of operators (for example, sharing a hardware board), the plurality of operators can be assigned shares of apparatus cost.

By sharing a frequency/antenna unit (for example, Radio Unit (RU)) between a plurality of operators, utilization efficiency of resources can be improved, for example, a certain operator can use a resource that is not used by another operator.

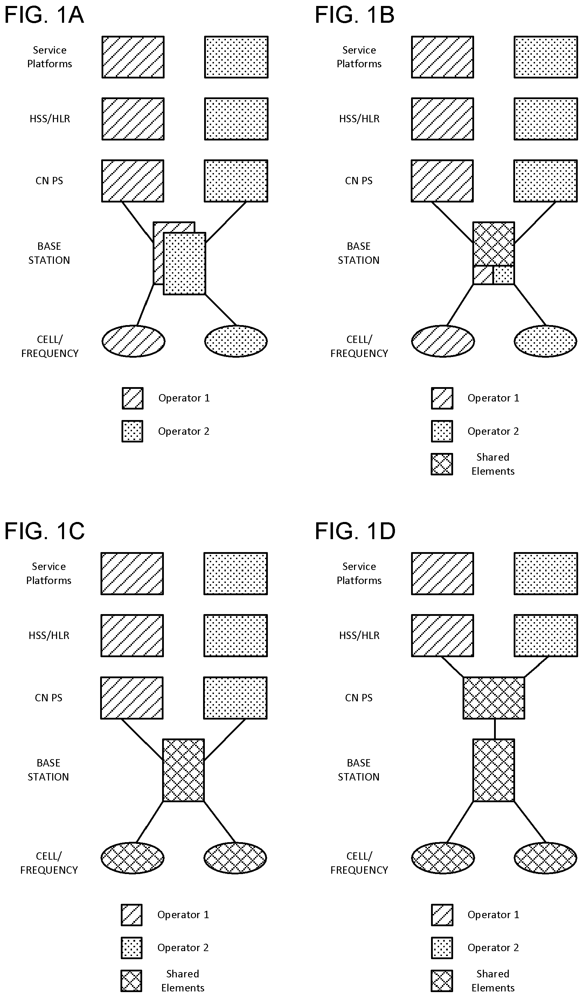

FIG. 1A to FIG. 1D are diagrams to show examples of network sharing.

FIG. 1A shows an example of site sharing. As shown in FIG. 1A, in site sharing, a plurality of operators shares an antenna site. On the other hand, each of the plurality of operators independently includes a service platform, an HSS (Home Subscriber Server)/HLR (Home Location Register), core network packet switching (CN PS), a base station, and a cell/frequency.

FIG. 1B shows an example of a MORAN (Multi Operator RAN). As shown in FIG. 1B, in the MORAN, a plurality of operators share a part of a base station (for example, hardware of a base station) in addition to an antenna site. On the other hand, each of the plurality of operators independently includes a service platform, an HSS/HLR, CN PS, another part of the base station (for example, software of the base station), and a cell/frequency.

FIG. 1C shows an example of a MOCN (Multi Operator Core Network). As shown in FIG. 1C, in the MOCN, a plurality of operators shares a base station and cell/frequency. On the other hand, each of the plurality of operators independently includes a service platform, an HSS/HLR, and a CN PS.

FIG. 1D shows an example of a GWCN (Gateway Core Network). As shown in FIG. 1D, in the GWCN, a plurality of operators shares a CN PS, a base station, and a cell/frequency. On the other hand, each of the plurality of operators independently includes a service platform and an HSS/HLR.

It is assumed that, in an MOCN/GWCN, a plurality of operators share a cell/frequency.

In this case, concerns arise that interference (cross link interference (CLI)) of DL/UL signals occurs between a UE corresponding to a first operator and a UE corresponding to a second operator and between a plurality of base stations.

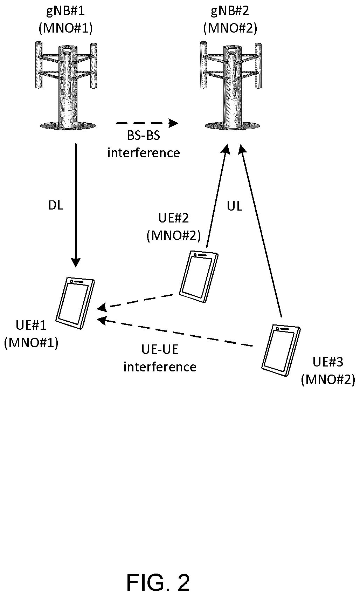

FIG. 2 is a diagram to show an example of CLI. The example shown in FIG. 2 illustrates an example in which a base station (gNB #1) corresponding to operator #1 (MNO #1), a base station (gNB #2) corresponding to operator #2 (MNO #2), a UE (UE #1) corresponding to MNO #1, and UEs (UEs #2 and #3) corresponding to MNO #2 communicate.

In the example shown in FIG. 2, gNB #1 and gNB #2 are illustrated separately. However, these base stations may be deployed at the same location and share facilities or may be deployed at different locations and share a frequency.

In the example shown in FIG. 2, it is conceivable that interference by UL signals from UEs #2 and #3 (UE-UE interference) occurs when UE #1 receives a DL signal.

In the example shown in FIG. 2, it is also conceivable that interference by the DL signal from gNB #1 (BS-BS interference) occurs when gNB #2 receives the UL signals from UEs #2 and #3.

However, it is not sufficiently studied about distinction/identification, by each gNB/UE, of the operator corresponding to the gNB/UE related to interference in such CLI. In existing specifications, an operation at the time of CLI detection depends on a base station, but study about an operation regarding prevention of interference in consideration of an influence on another operator is not sufficient. Unless these studies are sufficient, flexible communication operation per operator cannot be performed, which may suppress communication quality improvement.

Hence, the inventors of the present invention came up with the idea of a method of controlling interference at the time when operators share a frequency/cell, for efficient station deployment/frequency utilization by resource sharing.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, "ignore," "drop," "suspend," "cancel," "puncture," "rate-match," "postpone," and the like may be interchangeably interpreted.

In the present disclosure, a specific ID, an ID regarding a Public Land Mobile Network (PLMN), a PLMN ID, a PLMN identifier, a PLMN Identity, PLMN identifier information, PLMN Identity information, PLMN ID information, information for identifying an operator, an ID for identifying an operator, an ID for each operator, a group ID, a PLMN group ID, a PLMN, an operator, an operator policy, a Mobile Network Operator (MNO), a configuration per operator, and the like may be interchangeably interpreted.

In the present disclosure, a frequency, a cell, a band, a frequency band, a frequency range, a carrier, and a carrier frequency may be interchangeably interpreted.

In the present disclosure, interference, CLI, UE-UE interference, BS-BS interference, and the like may be interchangeably interpreted.

In the present disclosure, detection of interference, identification of interference, identification of a cause of interference, identification of an interference source, and the like may be interchangeably interpreted.

### (Radio Communication Method)

In the present disclosure below, description will be given by taking a PLMN ID as an example of a specific ID. However, the name of the specific ID is not limited to this.

In the present disclosure, a specific parameter (RRC parameter) and the specific ID (for example, a PLMN ID) may be associated.

For the association, a parameter regarding the specific ID may be included in the specific parameter.

For the association, a parameter regarding the specific ID may be included in another parameter included in the specific parameter.

For the association, a new parameter included in the specific ID may be associated with the parameter regarding the specific ID. The parameter regarding the specific ID may be included in the new parameter.

In the present disclosure, one or more base stations/frequencies may be shared by a plurality of operators. The base station(s) thus shared may be referred to as a commonly used base station(s) or a shared base station(s). The frequency (frequencies) thus shared may be referred to as a commonly used base frequency (frequencies) or a shared frequency (frequencies).

A specific base station/frequency may be used by only one operator. The base station/frequency may be referred to as an exclusively used base station/frequency or a dedicated base station/frequency.

In the present disclosure, a UE/base station subject to interference, an interfered UE/base station, a UE/base station that identifies interference, a UE/base station that measures interference, and an aggressor may be interchangeably interpreted. In the present disclosure, a UE/base station that transmits a signal/channel causing interference, an interfering UE/base station, and a victim may be interchangeably interpreted.

In the present disclosure, an MNO corresponding to a UE itself may be referred to as an its own MNO. In the present disclosure, an MNO different from its own MNO may be referred to as another MNO.

In the present disclosure, a configuration for a base station may be configured by another base station (for example, by using an X2 interface) or may be configured by a higher node (for example, a core network (CN)).

In the present disclosure, configuration/indication for a UE may be performed by using configuration information/indication information from a base station or may be performed by using configuration information/indication information from another UE (for example, an interfering UE).

When a received power/reception quality/measurement result (for example, an RSRP/RSRQ/SINR) of a specific channel/reference signal is smaller than a specific threshold (equal to or smaller than the specific threshold), a UE/base station may determine that the UE/base station is subject to interference.

In the present disclosure, "determine that a UE/base station is subject to interference" may be interpreted as a "received power/reception quality/measurement result of a specific signal received by a UE/base station is smaller than a specific threshold (equal to or smaller than the specific threshold)." The specific signal will be described below in detail.

### <First Embodiment>

A first embodiment relates to a method of identifying/detecting interference in a shared frequency.

### <<Embodiment 1-1>>

A UE/base station may detect interference, based on measurement of a specific signal. The UE/base station may identify interference, based on measurement of the specific signal.

The specific signal may be at least one of a specific DL signal (for example, a PDSCH/PDCCH/PBCH/CSI-RS/SSB/SS) and a specific UL signal (for example, a PUSCH/PUCCH/SRS/PRACH), for example.

The specific signal may be a newly defined signal for interference detection.

The specific signal may be determined separately for each operator. It may be supported that the specific signal is different for each operator.

A configuration of the specific signal may be configured separately for each operator. It may be supported that a configuration of the specific signal is different for each operator.

The configuration of the specific signal may be at least one of the type of signal, the frequency/time resource of the signal, and the periodicity/timing of the signal, for example.

The configuration of the specific signal may be performed by using higher layer signaling (for example, system information/RRC signaling).

The specific signal may be determined based on reported UE capability information. It may be supported that the specific signal is different based on reported UE capability.

A UE/base station causing interference (interfering UE/base station) may transmit the specific signal.

A UE/base station subject to interference (interfered UE/base station) may transmit the specific signal.

The interfering UE/base station may measure the specific signal. In this case, the specific signal may be a signal transmitted by a UE/base station corresponding to another operator (MNO) .

The interfered UE/base station may measure the specific signal. In this case, the specific signal may be a signal transmitted by a UE/base station corresponding to the other operator (MNO).

The interfering UE/base station may transmit/report a measurement result of the specific signal to the interfered UE/base station. In this case, the measurement result may be reported to the UE/base station corresponding to the other operator (MNO).

The interfered UE/base station may transmit/report a measurement result of the specific signal to the interfering UE/base station. In this case, the measurement result may be reported to the UE/base station corresponding to the other operator (MNO).

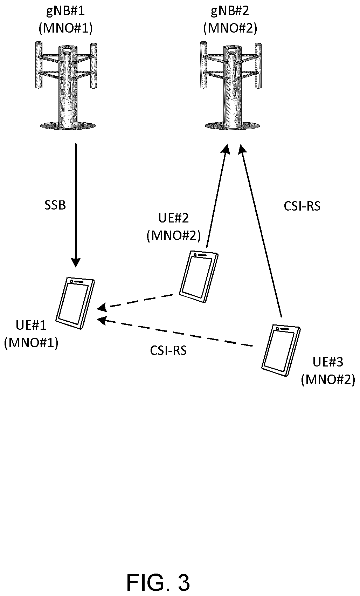

FIG. 3 is a diagram to show an example of measurement of interference according to embodiment 1-1. The example shown in FIG. 3 illustrates an example in which a base station (gNB #1) corresponding to operator #1 (MNO #1), a base station (gNB #2) corresponding to operator #2 (MNO #2), a UE (UE #1) corresponding to MNO #1, and UEs (UEs #2 and #3) corresponding to MNO #2 communicate.

In the example shown in FIG. 3, gNB #1 and gNB #2 are illustrated separately. However, these base stations may be deployed at the same location and share facilities or may be deployed at different locations and share a frequency.

In the example shown in FIG. 3, interference by UL signals (for example, CSI-RSs) from UEs #2 and #3 occurs when UE #1 receives a DL signal (for example, an SSB) from gNB #1. In this case, the UE(s) may detect the interference by measuring the DL signal. Alternatively, the UE(s) may detect the interference by measuring the UL signal(s).

### <<Embodiment 1-2>>

A UE/base station may detect interference, based on information regarding the position of a UE/base station (including at least one of the UE/base station and another UE/base station). The UE/base station may identify interference, based on the information regarding the position.

The information regarding the position may be positioning information/positioning system information, for example. The information regarding the position may be information based on the GNSS (Global Navigation Satellite system)/Global Positioning System (GPS) or may be information regarding the transmission path of a signal. The information regarding the transmission path of a signal may be information regarding the angle of arrival (AoA)/angle of departure (AoD) of the signal, for example.

Position information of a base station/UE (peripheral base station/UE) using a shared frequency may be shared by operators.

For example, each base station may hold/acquire the position information, a UE/base station may be notified of the position information by a higher node, a UE/base station may be notified of the position information by the base station of another operator, or a UE/base station may be notified of the position information by the Location Management Function (LMF).

A UE may be defined with UE capability information for reporting supporting of detection/identification of interference based on information regarding a position. The UE may report the UE capability information to a network.

Note that embodiment 1-2 may be employed in combination with at least one method described in embodiment 1-1 above.

According to the first embodiment above, even when a shared frequency is used, interference can be detected/identified appropriately.

### <Second Embodiment>

A second embodiment relates to an operation at the time of detection/identification of interference in a shared frequency.

### <<Embodiment 2-0>>

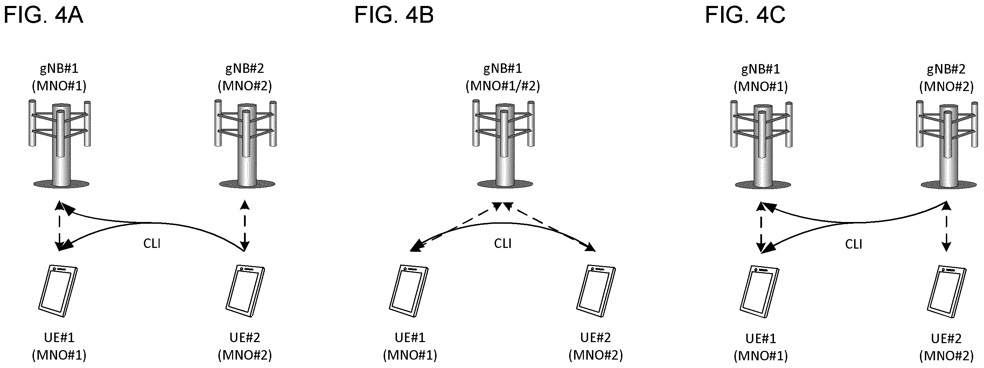

In the present disclosure, at least one of cases 1 to 3 below is assumed as a case of interference:
- case 1: case in which a UE of another MNO connected to another cell (base station) is an interfering UE (see FIG. 4A)
- case **2:** case in which a UE of another MNO connected to the same cell (base station) is an interfering UE (see FIG. 4B)
- case 3: case in which the base station of another MNO is an interfering base station (see FIG. 4C)

For each of cases 1 to 3 above, an operation of a UE/base station at the time of detection/identification of interference may be defined separately. It may be supported that an operation of a UE/base station at the time of detection/identification of interference is different for each of cases 1 to 3 above.

A concrete operation of a UE/base station at the time of detection/identification of interference will be described below. At least one of operations at the time of detection/identification of interference to be described below may be applied to at least one of cases 1 to 3 above.

### <<Embodiment 2-1>>

A UE/base station may report that interference has been detected.

The UE may report that interference has been detected, to at least one of a base station of its own MNO, a base station of another MNO, and a UE of the other MNO.

Between base stations of different MNOs, at least one of information regarding detection of interference (for example, information indicating that interference has been detected) and information regarding an interfering UE/base station may be notified.

A UE may be notified that the UE is an interfering UE, by the base station of the other MNO.

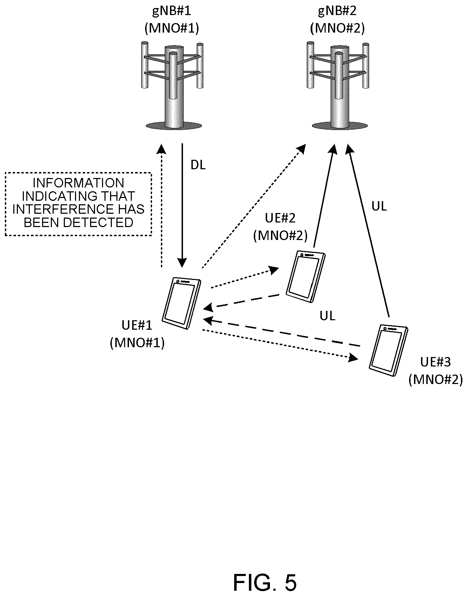

FIG. 5 is a diagram to show an example of measurement of interference according to embodiment 2-1. The example shown in FIG. 5 illustrates an example in which a base station (gNB #1) corresponding to operator #1 (MNO #1), a base station (gNB #2) corresponding to operator #2 (MNO #2), a UE (UE #1) corresponding to MNO #1, and UEs (UEs #2 and #3) corresponding to MNO #2 communicate.

In the example shown in FIG. 5, gNB #1 and gNB #2 are illustrated separately. However, these base stations may be deployed at the same location and share facilities or may be deployed at different locations and share a frequency.

In the example shown in FIG. 5, interference by UL signals from UEs #2 and #3 occurs when UE #1 receives a DL signal from gNB #1. In this case, the UE detects the interference by measuring the UL/DL signal.

In the example shown in FIG. 5, the UE transmits information indicating that interference has been detected, to at least one of gNB #1, gNB #2, and UE #2/UE #3.

### <<Embodiment 2-2>>

An interfering UE/base station may be notified of indication of an operation regarding interference. The indication may be indication of an operation for suppressing interference, for example. The indication may be information regarding detection of the interference.

The information may be transmitted to a peripheral base station (cell)/UE of the UE by using common control information. The common control information may be group-common uplink control information (UCI), for example.

The UE may receive the information from a base station/UE of another MNO.

A resource for transmitting/receiving the information may be configured for the UE. The resource may be a UE-specific (MNO-specific) resource or may be a common resource for a plurality of MNOs.

The operation regarding interference may be at least one of an operation regarding a transmission power and an operation regarding a specific resource.

For example, the interfering UE may assume/expect that UL transmission with a restricted (for example, reduced) transmission power is scheduled/triggered. A base station may schedule/trigger, for an interfering UE, UL transmission with a restricted (for example, reduced) transmission power.

For example, the restricted (reduced) transmission power may be derived by multiplying an existing expression for deriving a transmission power of UL transmission (for example, a PUCCH/PUSCH/SRS) by a specific constant (the constant being a positive number equal to or smaller than 1). The restricted (reduced) transmission power may be derived by subtracting a specific value from an existing expression for deriving a transmission power of UL transmission (for example, a PUCCH/PUSCH/SRS). The UE may be notified of the information regarding the specific constant/value by using higher layer signaling (RRC/MAC CE)/physical layer signaling (DCI).

For example, restriction (reduction) of a transmission power may be applied in a plurality of stages. For example, when the transmission power of the interfering UE after indication of first restriction of a transmission power satisfies a condition of an occurrence of interference, the base station may indicate, to the interfering UE, application of further restriction to the transmission power after the first restriction.

For example, the interfering UE may assume/expect that UL transmission with a restricted time/frequency/space resource is scheduled/triggered. The base station may schedule/trigger, for the interfering UE, UL transmission with a time/frequency/space resource restricted compared to the resource of UL transmission that can be scheduled/triggered for a UE not being the interfering UE.

For example, the base station may determine that a specific time resource is a resource for a UE/base station of a specific MNO in a specific period after detection of interference. In this case, control may be performed so that UL transmission using a time resource including at least part of the specific time resource is not scheduled/triggered for the interfering UE.

For example, the base station may determine that a specific frequency resource is a resource for a UE/base station of a specific MNO in a specific period after detection of interference. In this case, control may be performed so that UL transmission using a frequency resource including at least part of the specific frequency resource is not scheduled/triggered for the interfering UE.

For example, the base station may determine that use of a specific space resource (for example, beam) is not indicated to the interfering UE in a specific period after detection of interference. In this case, use of the specific space resource (beam) may be restricted for the interfering UE.

The specific periods may be defined in a specification in advance, configured for the UE by higher layer signaling, or determined based on reporting of UE capability information.

### <<Embodiment 2-3>>

A UE/base station notified of indication of an operation regarding interference may transmit feedback information for the indication. The feedback information may be information indicating that the operation regarding interference has been applied, for example.

The feedback information may be transmitted by using a specific UL/DL signal, for example.

The UE may report the feedback information (for example, information indicating that the operation regarding interference has been applied) to at least one of a base station of its own MNO, a base station of another MNO, and a UE of another MNO.

Between base stations of different MNOs, information regarding the operation of interference (for example, information indicating that the operation regarding interference has been applied) may be notified.

The UE may be notified, by the base station of the other MNO, that at least one of the base station of its own MNO, the base station of the other MNO, and the UE of the other MNO has applied the operation regarding interference.

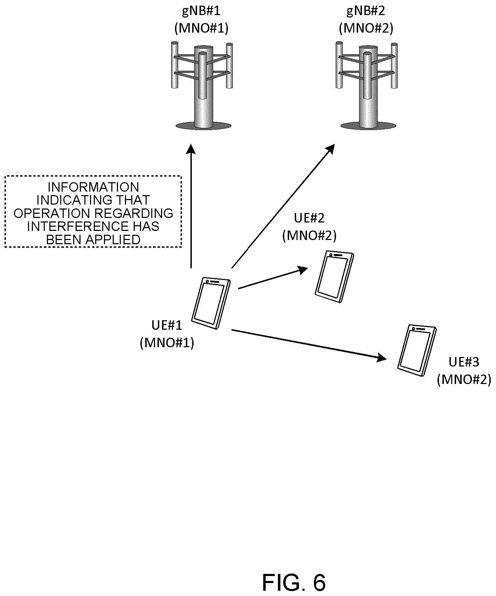

FIG. 6 is a diagram to show an example of measurement of interference according to embodiment 2-3. The example shown in FIG. 6 illustrates an example in which a base station (gNB #1) corresponding to operator #1 (MNO #1), a base station (gNB #2) corresponding to operator #2 (MNO #2), a UE (UE #1) corresponding to MNO #1, and UEs (UEs #2 and #3) corresponding to MNO #2 communicate.

In the example shown in FIG. 6, gNB #1 and gNB #2 are illustrated separately. However, these base stations may be deployed at the same location and share facilities or may be deployed at different locations and share a frequency.

In the example shown in FIG. 6, UE #1 receives indication of an operation regarding interference. The UE performs the operation regarding interference based on the indication and transmits feedback information indicating that the operation has been applied, to at least one of gNB #1, gNB #2, and UE #2/UE #3.

According to the second embodiment above, interference in a shared frequency can be suppressed/reduced appropriately.

### <Supplements>

At least one of the embodiments above may be applied only to a UE that has reported a specific UE capability or that supports the specific UE capability.

The specific UE capability may indicate supporting of specific processing/operation/control/information about at least one of the embodiments above (for example, at least one of measurement of interference based on a specific signal, identification of interference based on information of a position, reporting/notification of detection of interference, an operation regarding interference, and feedback for indication about an operation regarding interference).

The specific UE capability may be capability applied over all the frequencies (in common irrespective of frequency), capability for each frequency (for example, cell, band, or BWP), capability for each frequency range (for example, Frequency Range 1 (FR1), FR2, FR3, FR4, FR5, FR2-1, and FR2-2), or capability for each subcarrier spacing (SCS).

The specific UE capability may be capability applied for all the duplex schemes (in common irrespective of duplex scheme) or capability for each duplex scheme (for example, time division duplex (TDD) and frequency division duplex (FDD)).

At least one of the embodiments above may be applied to a case where the UE is configured with specific information related to the embodiment above by higher layer signaling. For example, the specific information may be any RRC parameter for a specific release (for example, Rel. 18).

When the UE does not support at least one of the specific UE capabilities or is not configured with the specific information, the UE may apply Rel-15/16 operation, for example.

### (Supplementary Notes)

In regard to one embodiment of the present disclosure, the following supplementary notes of the invention will be given.

### {Supplementary Note 1}

A terminal corresponding to a first operator, the terminal including:
a receiving section that receives configuration information regarding a signal for measuring interference, and receives, based on the configuration information, the signal for measuring interference from at least one of a terminal and a base station corresponding to a second operator; and
a control section that determines, based on the signal for measuring interference, interference by a signal from at least one of the terminal and the base station corresponding to the second operator that has transmitted the signal for measuring interference.

### {Supplementary Note 2}

The terminal according to supplementary note 1, wherein the receiving section further receives information indicating an operation regarding interference, and the control section applies, based on the information, the operation regarding interference.

### {Supplementary Note 3}

The terminal according to supplementary note 1 or 2, wherein the control section assumes a restriction on a transmission power of an uplink signal and a restriction on a resource for the uplink transmission.

### {Supplementary Note 4}

The terminal according to any one of supplementary notes 1 to 3, wherein the control section performs control to transmit feedback information for indication of the operation regarding interference.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

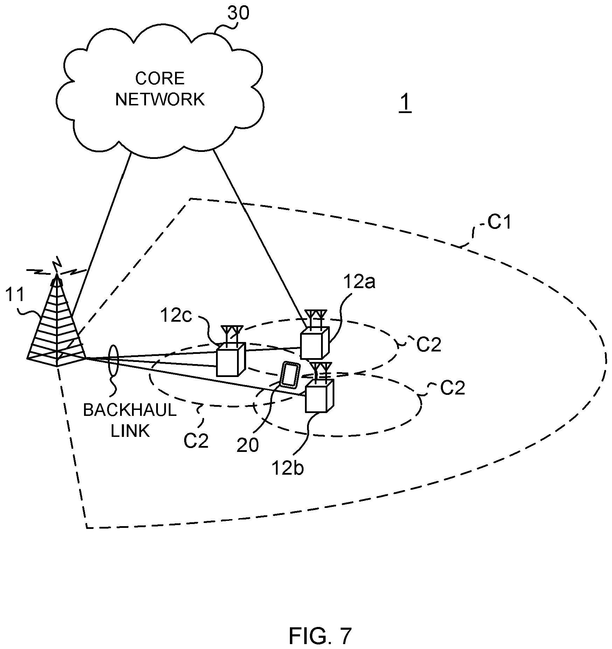

FIG. 7 is a diagram to show an example of a schematic structure of the radio communication system according to one embodiment. The radio communication system 1 (which may be simply referred to as a system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF) such as a User Plane Function (UPF), an Access and Mobility management Function (AMF), a Session Management Function (SMF), Unified Data Management (UDM), an ApplicationFunction (AF), a Data Network (DN), a Location Management Function (LMF), and operation, administration, and maintenance (Management) (OAM), for example. Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a reference signal for measurement (Sounding Reference Signal (SRS)), a demodulation reference signal (DMRS), and so on may be communicated as an uplink reference signal (UL-RS). Note that DMRS may be referred to as a "user terminal specific reference signal (UE-specific Reference Signal)."

### (Base Station)

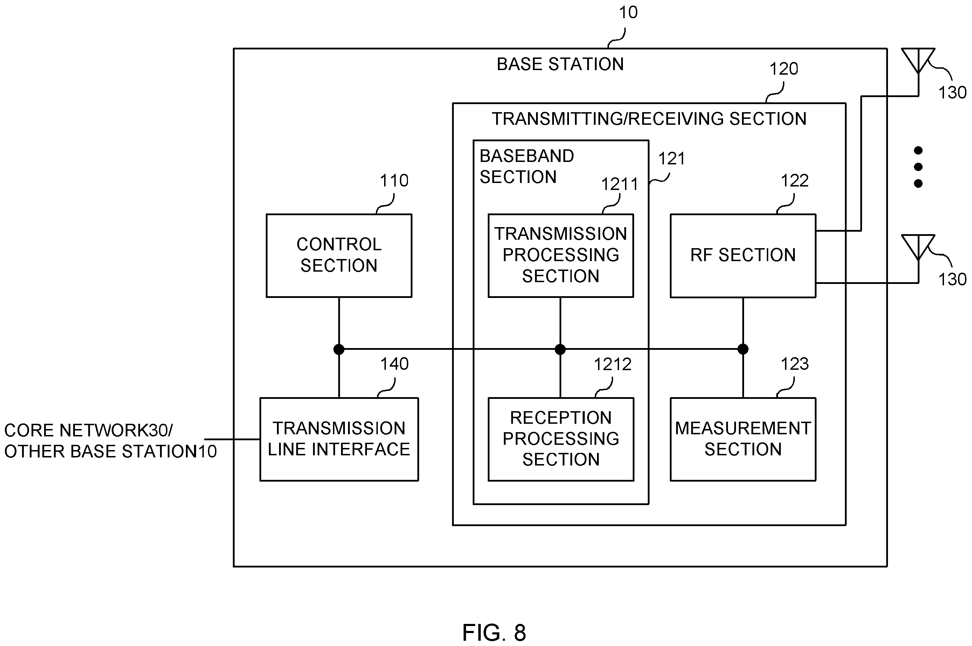

FIG. 8 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement regarding the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may transmit/receive (perform backhaul signaling of) a signal with an apparatus (for example, a network node providing NFs) included in the core network 30 or other base stations 10, and so on, and may acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

In a base station corresponding to a first operator (MNO), the transmitting/receiving section 120 may receive configuration information regarding a signal (specific DL/UL signal) for measuring interference, and receive, based on the configuration information, the signal for measuring interference from at least one of a terminal and a base station corresponding to a second operator. The control section 110 may determine, based on the signal for measuring interference, interference by a signal from at least one of the terminal and the base station corresponding to the second operator that has transmitted the signal for measuring interference (first embodiment).

### (User Terminal)

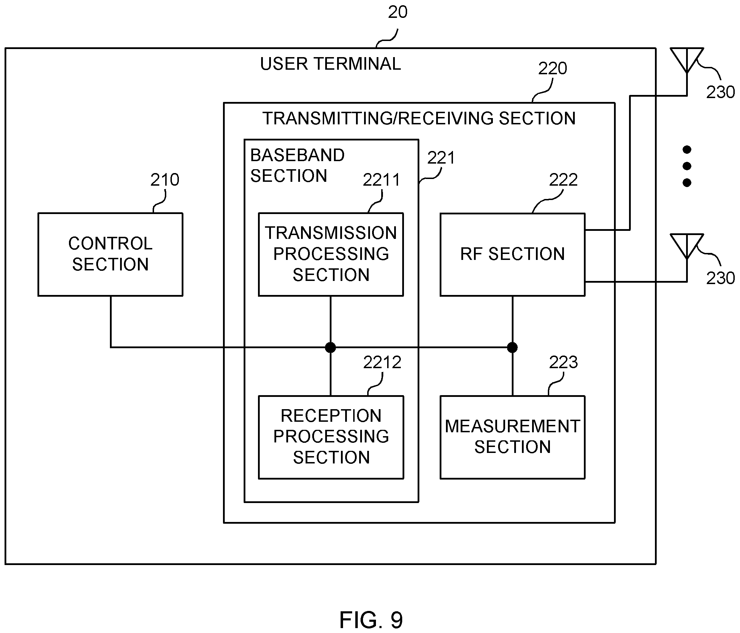

FIG. 9 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement regarding the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

In a terminal corresponding to a first operator (MNO), the transmitting/receiving section 220 may receive configuration information regarding a signal (specific DL/UL signal) for measuring interference, and receive the signal for measuring interference from at least one of a terminal and a base station corresponding to a second operator, based on the configuration information. The control section 210 may determine, based on the signal for measuring interference, interference by a signal from at least one of the terminal and the base station corresponding to the second operator that has transmitted the signal for measuring interference (first embodiment).

The transmitting/receiving section 220 may further receive information indicating an operation regarding interference. The control section 210 may apply the operation regarding interference, based on the information (second embodiment).

The control section 210 may assume a restriction on a transmission power of an uplink signal and a restriction on a resource for the uplink transmission (second embodiment).

The control section 210 may perform control to transmit feedback information for indication of the operation regarding interference (second embodiment).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

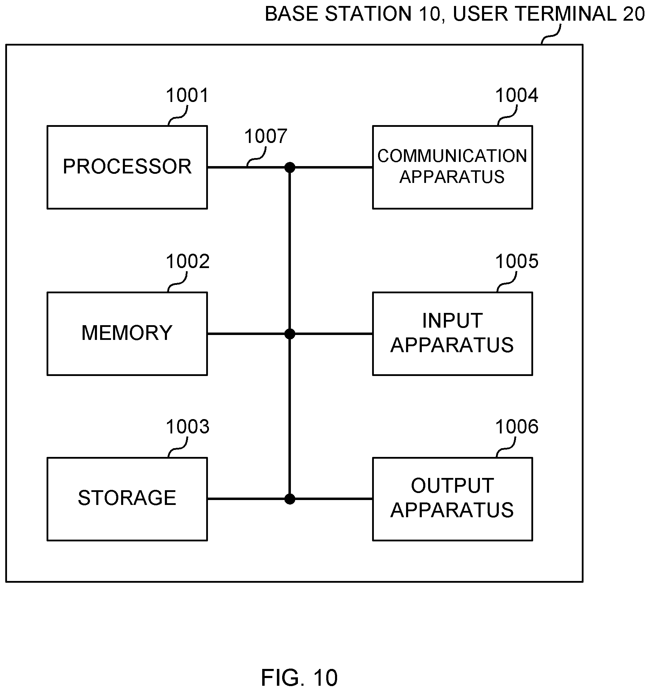

For example, a base station, a user terminal, and so on according to one embodiment of the present disclosure may function as a computer that executes the processes of the radio communication method of the present disclosure. FIG. 10 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) may be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB **(PRB)),"** a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP."

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be provided using, for example, MAC control elements (MAC CEs).

Also, notification of certain information (for example, notification of "X holds") does not necessarily have to be provided explicitly, and can be provided implicitly (by, for example, not providing the notification of this certain information or providing the notification of another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the base station transmitting information to the terminal may be interchangeably interpreted as the base station indicating, to the terminal, control/operation based on the information.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

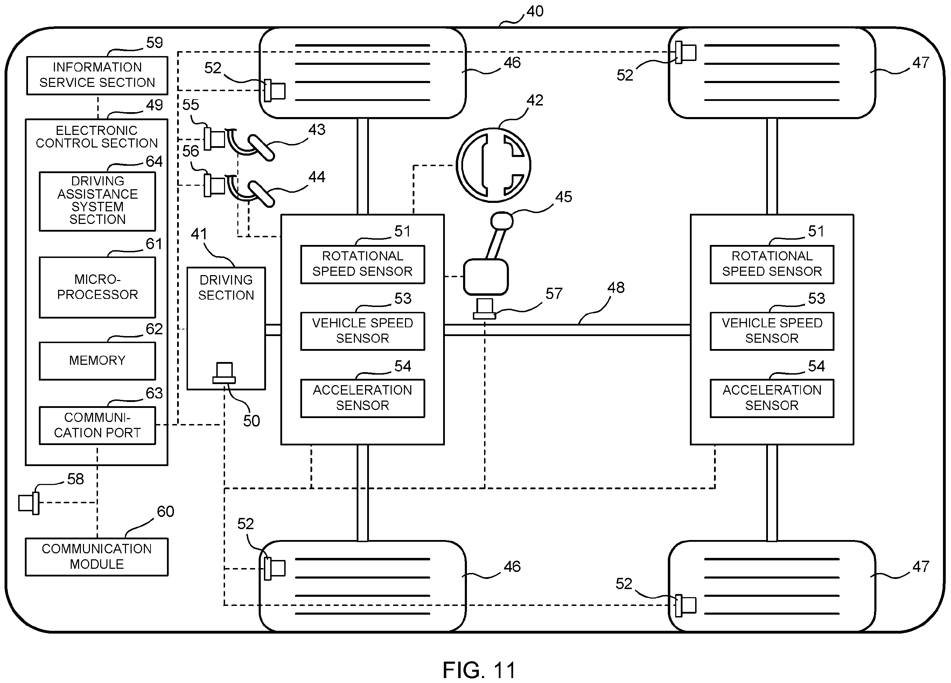

FIG. 11 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device **(D2D),"** "Vehicle-to-Everything **(V2X),"** and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B are each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

In the present disclosure, "equal to or less than," "less than," "equal to or more than," "more than," "equal to," and the like may be interchangeably interpreted. In the present disclosure, terms meaning "good," "bad," "large," "small," "high," "low," "early," "late," "wide," "narrow," and the like may be interchangeably interpreted regardless of whether the terms are at a positive degree, a comparative degree, and a superlative degree. In the present disclosure, terms meaning "good," "bad," "large," "small," "high," "low," "early," "late," "wide," "narrow," and the like may be interchangeably interpreted as expressions with "the ith" (i is any integer) regardless of whether the terms are at the positive degree, the comparative degree, and the superlative degree (for example, "highest" may be interpreted as "i-th highest," and vice versa).

In the present disclosure, "of," **"for,"** "regarding," "related **to,"** "associated with," and the like may be interchangeably interpreted.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal corresponding to a first operator, the terminal comprising:
a receiving section that receives configuration information regarding a signal for measuring interference, and receives, based on the configuration information, the signal for measuring interference from at least one of a terminal and a base station corresponding to a second operator; and
a control section that determines, based on the signal for measuring interference, interference by a signal from at least one of the terminal and the base station corresponding to the second operator that has transmitted the signal for measuring interference.

2. The terminal according to claim **1,** wherein
the receiving section further receives information indicating an operation regarding interference, and
the control section applies, based on the information, the operation regarding interference.

3. The terminal according to claim **2,** wherein
the control section assumes a restriction on a transmission power of an uplink signal and a restriction on a resource for the uplink transmission.

4. The terminal according to claim **2,** wherein
the control section performs control to transmit feedback information for indication of the operation regarding interference.

5. A radio communication method for a terminal corresponding to a first operator, the radio communication method comprising:
receiving configuration information regarding a signal for measuring interference, and receiving, based on the configuration information, the signal for measuring interference from at least one of a terminal and a base station corresponding to a second operator; and
determining, based on the signal for measuring interference, interference by a signal from at least one of the terminal and the base station corresponding to the second operator that has transmitted the signal for measuring interference.

6. A base station corresponding to a first operator, the base station comprising:
a receiving section that receives configuration information regarding a signal for measuring interference, and receives, based on the configuration information, the signal for measuring interference from at least one of a terminal and a base station corresponding to a second operator; and
a control section that determines, based on the signal for measuring interference, interference by a signal from at least one of the terminal and the base station corresponding to the second operator that has transmitted the signal for measuring interference.
